# EUROPÄISCHE PATENTANMELDUNG

(11) **EP 0 834 392 A2**
(43) Veröffentlichungstag der Anmeldung: **08.04.1998**
(21) Anmeldenummer: 97115781.3
(22) Anmeldetag: 11.09.1997
(51) Int. Cl.: B29C 70/50, B29B 15/12, B29D 23/18, B29C 63/34

(54) **Verfahren und Vorrichtung zum Herstellen eines Schlauchs zum Auskleiden von Rohrleitungen und Kanalsystemen**

(30) Priorität: 17.09.1996 DE 19637795
(71) Anmelder: Rothenberger Rohrsanierung GmbH, 65779 Kelkheim / Ts (DE)
(72) Erfinder: Henze, Michael, Dipl.-Ing., 63500 Seligenstadt (DE)
(74) Vertreter: Zapfe, Hans, Dipl.-Ing.

(57) **Zusammenfassung**

Beim Herstellen eines transportfähigen, mehrlagigen Schlauches (1) mit einer gasundurchlässigen Außenlage (2) und mindestens einer mit einem aushärtbaren Harz (11) imprägnierten Lage (3) aus einem Faserwerkstoff (4) zum Auskleiden von Rohrleitungen und Kanalsystemen unter Anwendung von unteratmosphärischem Druck und von Walzen (7, 8), zwischen denen mindestens ein Walzenspalt (6) für die Durchführung des Schlauches (1) gebildet wird, wird zur Vergleichmäßigung und Beschleunigung der Imprägnierung der zunächst noch unimprägnierten Schlauch (1) von unten her in den Walzenspalt (6) eingeführt und Luft aus dem unimprägnierten Teilabschnitt (1a) des Schlauchs (1) evakuiert. Dabei wird flüssiges Harz (11) in die zunächst noch offene Anfangsöffnung (1d) des Schlauchs (1) eingebracht und über dem Walzenspalt (6) aufgestaut. Anschließend wird der Schlauch (1) mit einer nach oben gerichteten Komponente aus dem Walzenspalt (6) mit einer solchen Geschwindigkeit abgezogen, daß die Grenze zwischen dem imprägnierten und den nicht imprägnierten Teilabschnitten (1a bzw. 1b) des Schlauchs (1) im wesentlichen im Bereich des Walzenspaltes (6) gehalten wird, und daß man schließlich den Schlauch (1) durch mindestens einen weiteren Walzenspalt (36, 38, 39) abzieht und auf einer Transporteinrichtung (30) sammelt.

## Beschreibung

Die Erfindung betrifft ein Verfahren zum Herstellen eines transportfähigen, mehrlagigen Schlauchs mit einer gasundurchlässigen Außenlage und mindestens einer mit einem aushärtbaren Harz imprägnierten Lage aus einem Faserwerkstoff zum Auskleiden von Rohrleitungen und Kanalsystemen unter Anwendung von unteratmosphärischem Druck und von Walzen, zwischen denen mindestens ein Walzenspalt für die Durchführung des Schlauches gebildet wird.

Derartige Schläuche werden auch als "Liner" bezeichnet. Sowohl ihre Herstellung als auch ihre Verlegung bei der Sanierung von Rohrleitungen und Kanalsystemen sind kompliziert und zeitaufwendig, und zwar insbesondere dann, wenn es sich um die Herstellung und Verarbeitung von Schläuchen größerer Länge handelt. Das tragende Element ist nach der Aushärtung die schlauchförmig geschlossene Lage aus dem imprägnierten Faserwerkstoff. Zur Erzielung einer hohen Festigkeit muß das Harz bzw. der Faserwerkstoff soweit wie irgend möglich frei von Hohlräumen sein, die durch Lufteinschlüsse aber auch durch ungenügende Tränkung des Faserwerkstoffs entstehen können. Die Aushärtung des Harzes kann entweder durch Wärme, sichtbares Licht oder ultraviolettes Licht erfolgen. Für diesen Zweck ist eine ganz Reihe von Harzmaterialien im Handel, die zur Beschleunigung der Aushärtung mit Aktivatoren und Bechleunigern versetzt sein können. Bekannt sind auch kalt aushärtende Harze, bei denen die Aushärtung verzögert eingestellt wird.

Derartige Schläuche oder Liner können beispielsweise in flachliegendem Zustand in den Sanierungsbereich eingezogen und nach Anbringung von sogenannten Endverschlüssen durch ein unter Druck stehendes Medium aufgebläht und gegen die zu sanierenden Wandungen gepreßt werden. Eine andere Methode des Einbringens des Schlauches oder Liners besteht im sogenannten Umstülpen oder Evertieren. In beiden Fällen ist der imprägnierte Faserwerkstoff zum Zwecke der Handhabung des Schlauchs auf der Außenseite von einer gasundurchlässigen Außenlage aus einer schlauchförmigen Folie umgeben, die selbstverständlich auch harzdicht ist. Beim Aufblasen eines solchen Schlauchs kommt nun diese Außenfolie mit der zu sanierenden Wandfläche in Berührung, und der imprägnierte Faserwerkstoff liegt innen. Um nun Strahlungsquellen für die Aushärtung durch einen solchen aufgeblasenen Schlauch hindurch bewegen zu können, wird in diesen Schlauch auf der Baustelle eine schlauchförmige Innenfolie eingezogen. Beim Umstülpen oder Evertieren ist diese Maßnahme überflüssig, da durch den Umstülpvorgang der ursprünglich innenliegende imprägnierte Faserwerkstoff nach außen gelangt, jedoch ist der Vorgang des Umstülpens und des nachträglichen Transports der Strahlungsquellen durch den umgestülpten Schlauch keine einfach zu bewerkstelligende Maßnahme.

Besonders schwierig ist hierbei die Durchführung einer gleichmäßigen Imprägnierung, und zwar insbesondere dann, wenn mindestens eine der Oberflächen des Faserwerkstoffs mit einer Folie versehen ist. Man ist daher in der Regel so verfahren, daß man den Schlauch oder Liner erst auf der Baustelle fertig konfektioniert hat, indem man die Tränkung oder Imprägnierung auf der Baustelle durchgeführt hat. Beim Umstülpen oder Evertieren hat man sogar Verfahren angewandt, den Faserwerkstoff erst an der Stelle des Umstülpens mit dem jeweiligen Harz zu tränken. Diese Maßnahme erfordert die Bereitstellung von entsprechenden Vorrichtungen und deren Betrieb auf der Baustelle, so daß eine ständige Verlegung der Vorrichtungen erforderlich ist.

Durch die DE 22 40 153 C2 ist es bekannt, einen inneren Folienschlauch mit einer Bahn aus einem Fasermaterial durch Falten zu umgeben, wobei die Überlappungsstelle des Fasermaterials kontinuierlich durch eine Nähvorrichtung geführt wird, so daß sich ein Filzschlauch ergibt, der den Folienschlauch umhüllt. Dieser Verbund wird nachfolgend zwischen zwei Folienrollen hindurchgeführt, und die überstehenden Ränder dieser äußeren Folien werden miteinander verschweißt, so daß ein Schlauch mit einer Innenfolie und einer Außenfolie entsteht. Dieser Schlauch ist zunächst noch unimprägniert, ein Zustand, der nachfolgend als "trocken" bezeichnet wird. Es ist das erklärte Ziel dieses Verfahrens, die Imprägnierung bzw. Tränkung erst unmittelbar vor dem Einbringen in den Kanal durchzuführen. Zu diesem Zweck wird der kontinuierlich abwärts bewegte Schlauch unmittelbar über dem zu sanierenden Kanal zwischen in mehreren Etagen angeordneten Walzen hindurchgeführt, und der äußere Folienschlauch wird in Abständen über dem obersten Walzenpaar mit Öffnungen oder Einschnitten versehen, in die Düsen eingeführt werden, durch die das Harz mittels Pumpen in das Fasermaterial eingespritzt wird. Die Harzzufuhr geschieht also punktförmig, so daß ein erhebliches Problem der Harzverteilung in dem Fasermaterial besteht, dessen Hohlräume mit Luft gefüllt sind. Sobald die Harzdüsen in die Nähe des oberen Walzenpaares gelangen, müssen sie herausgezogen und die Öffnungen einzeln verklebt werden, ein Vorgang, der entsprechend aufwendig ist. Die Einarbeitung des Harzes in das Fasermaterial erfolgt dabei durch die besagte Vielzahl von Walzen, von denen das unterste Walzenpaar die Funktion von Preßwalzen hat, um die Harzmenge zu dosieren. Ein ungelöstes Problem ist hierbei das Entweichen der beim Imprägnierungsvorgang verdrängten Luftmenge, die wegen der geschlossenen Außenfolie nicht entweichen kann, sondern den gesamten Verbund bis zum offenen Ende des trockenen Teilabschnitts des Schlauches durchströmen muß.

Durch die DE 35 46 417 A1 ist es bekannt, einen Verbund aus einem inneren Folienschlauch und einem äußeren Faserschlauch zunächst unter der Einwirkung von Walzen in einer Tränkwanne zu imprägnieren und anschließend mit einem äußeren Folienschlauch zu umgeben, der ziehharmonikaähnlich auf eine Führungsvorrichtung aufgeschoben ist, von der der äußere Folienschlauch nach Maßgabe der Geschwindigkeit des imprägnierten Schlauchs abgezogen wird. Mit einem solchen Verfahren sind jedoch nur sehr begrenzte Längen von Schlauchabschnitten herstellbar, und es ist nach wie vor das Problem nicht gelöst, Lufteinschlüsse in dem Fasermaterial ausreichend zu beseitigen, zumal die Preßwalzen in der Tränkwanne laufend Luftblasen freisetzen, die wegen der Viskosität des Harzes nur ungenügend entweichen können, so daß ständig ein Teil der Luft von dem Fasermaterial mitgeschleppt wird. Auch läßt sich der Einschluß von Luft zwischen dem äußeren Folienschlauch und dem bereits imprägnierten Schlauch nicht vermeiden. Auch dieses bekannte Verfahren wird unmittelbar auf der Baustelle durchgeführt, so daß die Vorrichtung von Sanierungsabschnitt zu Sanierungsabschnitt weiter transportiert werden muß.

Auch die EP 0 301 204 A1 offenbart ein Verfahren zur Innenerneuerung von Rohrleitungen, das unmittelbar auf der Baustelle angewandt wird. Dabei soll die Tränkung bzw. Imprägnierung in einem Harzbad bei 0,4 bis 1 bar und unter Abquetschen durchgeführt werden. Der Unterdruck soll dabei eine Höhendifferenz zwischen den Harzspiegeln in zwei unterschiedlichen Behältern erzeugen. Es bleibt jedoch völlig offen, welchen Einfluß der Unterdruck auf den Vorgang der Imprägnierung haben könnte, denn das Fasermaterial, das auch als Armierungsschicht bezeichnet wird, ist zwischen einer schlauchförmigen Innenfolie und einer schlauchförmigen Außenfolie eingeschlossen, so daß eine Imprägnierung über die Schlauchoberflächen nicht möglich ist, sondern allenfalls von den Schlauchenden her.

Es wurden auch bereits nicht öffentliche Versuche durchgeführt, in das zunächst noch offene Ende eines nur von einer Außenfolie umgebenen Faserschlauchs eine vorgegebene Harzportion einzufüllen, das Schlauchende zu schließen und den Schlauch kontinuierlich durch den Walzenspalt zweier übereinander liegender Quetschwalzen hindurchzuführen, die gewissermaßen die eingeschlossene Harzportion entgegen der Bewegungsrichtung des Schlauchs vor sich herschieben. Hierbei wurde durch Einstechen von Vakuumleitungen in den trockenen Teilabschnitt des Schlauches der größte Teil der Luft aus dem Faserwerkstoff entfernt, wobei jedoch gleichfalls die Notwendigkeit bestand, die Vakuumleitungen nach Maßgabe der Wanderung des Schlauchs wieder aus diesem herausziehen und die dadurch gebildete Leckstelle sowohl gegen das Eindringen von Luft als auch gegen das spätere Austreten von Harz zuverlässig zu verschließen. Hierbei bestand jedoch das Problem einer stark unterschiedlichen Wanderung des Harzes in Längsrichtung des Schlauches unter der Wirkung des Vakuums. Da unter allen Umständen vermieden werden mußte, daß trockene Stellen des Schlauches in den Walzenspalt eintreten, mußte die Bewegungsgeschwindigkeit des Schlauches auf die geringste Wanderungsgeschwindigkeit des Hartes in Längsrichtung des Schlauches abgestimmt werden, so daß die Produktivität entsprechend gering war. Das Vakuum wurde also auf denjenigen Seite des Walzenspaltes erzeugt, auf der sich auch die eingeschlossene Harzportion befand, so daß der Walzenspalt keinen vergleichmäßigenden Einfluß auf die Wanderungsgeschwindigkeit des Harzes in dem evakuierten Teilabschnitt des Schlauches hatte.

Der Erfindung liegt daher die Aufgabe zugrunde, ein Verfahren der eingangs beschriebenen Gattung anzugeben, durch das eine außerordentlich gleichmäßige Imprägnierung des Faserwerkstoffs bei weitgehender Freiheit von Lufteinschlüssen bei hoher Produktionsgeschwindigkeit erreicht wird.

Die Lösung der gestellten Aufgabe erfolgt bei dem eingangs angegebenen Verfahren erfindungsgemäß dadurch, daß man den zunächst noch unimprägnierten Schlauch von unten her in den Walzenspalt einführt und Luft aus dem unimprägnierten Teilabschnitt des Schlauchs evakuiert, flüssiges Harz in die zunächst noch offene Anfangsöffnung des Schlauchs einbringt und über dem Walzenspalt aufstaut, und den Schlauch mit einer nach oben gerichteten Komponente aus dem Walzenspalt mit einer solchen Geschwindigkeit abzieht, daß die Grenze zwischen dem imprägnierten und dem nicht imprägnierten Teilabschnitt des Schlauchs im wesentlichen im Bereich des Walzenspaltes gehalten wird, und daß man schließlich den Schlauch durch mindestens einen weiteren Walzenspalt abzieht und auf einer Transporteinrichtung sammelt.

Mit dem erfindungsgemäßen Verfahren sind folgende Vorteile verbunden: Der Walzenspalt definiert eine sogenannte "Tränklinie", d.h. die Grenze zwischen dem trockenen bzw. unimprägnierten Teilabschnitt des Schlauches und dem imprägnierten Teilabschnitt des Schlauches verläuft im wesentlichen linear und waagrecht, weil die Verdichtung des Schlauches im Walzenspalt ein Durchsickern des Harzes zumindest weitgehend verhindert. Der Ausdruck "im Bereich des Walzenspaltes" besagt nicht, daß die sogenannte Tränklinie nun an der engsten Stelle des Walzenspaltes liegen muß, vielmehr sind Abweichungen nach oben oder nach unten durchaus zulässig. Es handelt sich jedoch um eine stabile Einstellung der Tränklinie, wobei diese Einstellung durch die Viskosität des Harzes unterstützt wird. Das Vakuum befindet sich - in Transportrichtung des Schlauches gesehen - ausschließlich diesseits des Walzenspaltes, wobei der flachliegende Schlauch auch unter dem Einfluß des atmosphärischen Drucks komprimiert wird. In den Walzenspalt treten praktisch luftfreie Hohlräume innerhalb des Faserwerkstoffs ein, die äußerst kurzfristig durch das Harz ausgefüllt werden, da jenseits des Walzenspaltes wieder Atmosphärendruck herrscht, der sich über den Schlauch auf das Harz überträgt, wobei die Imprägnierung zusätzlich durch den geodätischen Druck der Harzsäule unterstützt wird.

Die notwendige Flächenpressung zur Luftverdrängung innerhalb des Walzenspaltes wird durch Versuche bestimmt und ist durch Horizontalverstellung mindestens einer der Walzen einstellbar. Durch die Wiederausdehnung des elastisch komprimierten Faserwerkstoffs unmittelbar oberhalb des Walzenspalts erfolgt eine äußerst gleichmäßige Imprägnierung des Faserwerkstoffs bei praktisch vollständiger Freiheit von Lufteinschlüssen in Verbindung mit einer gesteigerten Produktionsgeschwindigkeit.

Die Einstellung der Abzugsgeschwindigkeit auf einen möglichst hohen Wert kann visuell oder meßtechnisch erfaßt werden: Ein Eindringen des Harzes in einen Bereich wesentlich unterhalb der engsten Stelle des Walzenspaltes ist von außen her deutlich sichtbar, so daß die Abzugsgeschwindigkeit gegebenenfalls gesteigert werden kann, bis die optimalen Bedingungen wieder eingestellt sind. Dies ermöglicht eine bessere Qualitätskontrolle und Qualitätssicherung, da der zu überwachende Tränkbereich sehr klein bzw. schmal ist. Der mindestens eine weitere Walzenspalt dient dazu, überschüssiges Hart abzuquetschen und der über dem Walzenspalt gestauten Harzmenge zuzuführen. Auf diese Weise wird auch der Druck im Harz erhöht und ein optimal getränkter Schlauch ohne jegliche Lufteinschlüsse erzeugt.

Von besonderem Vorteil ist aber die Tatsache, daß man auf diese Weise beliebige Mengen an Schläuchen abseits der Baustelle herstellen und lagern kann, sofern man dafür sorgt, daß die Aushärtebedingungen nicht eingeleitet werden können, d.h. der fertige Schlauch ist gegen den Einfluß von Wärme, Licht und/oder UV-Strahlung zu schützen. Die benötigten Schlauchmengen lassen sich alsdann kurzfristig vom Lager abrufen und an die betreffende Baustelle verbringen, so daß auf der Baustelle keine Herstellvorrichtung verfügbar sein muß, die von Sanierungsabschnitt zu Sanierungsabschnitt weiter bewegt werden müßte.

Die Transporteinrichtung zum Sammeln des Schlauches kann in unterschiedlicher Weise ausgeführt sein: Beispielhaft kann der Schlauch durch eine Oszillationsbewegung in Mäanderform auf einer Palette abgelegt werden. Es ist jedoch ohne weiteres möglich, den fertig imprägnierten Schlauch auch auf einer Trommel oder Rolle aufzuwickeln und in dieser Form auf die Baustelle zu verbringen.

Das erfindungsgemäße Verfahren ermöglicht auch eine äußerst vorteilhafte weitere Ausgestaltung, nämlich dadurch, daß ein Schlauch mit einer gasundurchlässigen flach aufeinanderliegenden Innenlage eingesetzt wird und daß das flüssige Harz beiderseits dieser Innenlage oberhalb des Walzenspalts aufgestaut wird.

Das Vorhandensein einer flach aufeinanderliegenden schlauchförmigen Innenlage vermeidet das nachträgliche Einziehen einer solchen Innenlage. Der erfindungsgemäß hergestellte Schlauch läßt sich innerhalb des Sanierungsabschnitts der Rohrleitung zusammen mit der Innenlage aufblasen und ist danach sofort mit der Strahlungsquelle für die Aushärtung des Harzes befahrbar. Dadurch entfällt das äußerst arbeitsintensive und umständliche Einstülpen bzw. Umkrempeln oder Evertieren der Innenlage bzw. des Innenschlauchs.

Eine solche Vereinfachung war mit den bisher üblichen Imprägnierverfahren nicht möglich, weil die Innenlage bzw. der Innenschlauch die Imprägnierung verhinderte. Beim erfindungsgemäßen Verfahren "schwimmt" die flachliegende Innenlage gewissermaßen im aufgestauten Harzvolumen, d.h. sie wird allseitig vom Harz umgeben und behindert nicht die Imprägnierung des Faserwerkstoffs.

Vor allem aber befindet sich zwischen der Innenlage und dem imprägnierten Faserwerkstoff keinerlei Luftpolster, so daß eine Innenoberfläche des Faserwerkstoffs erzielt wird, die völlig glatt und frei von Luftblasen oder Lunkern ist.

Die besagte schlauchförmige Innenlage kann entweder schon beim Hersteller des trockenen Schlauches oder unmittelbar vor der Imprägnierung eingezogen werden, wenn eine rasche Disposition erforderlich ist.

Die eingezogene Innenlage wird dadurch gegen Beschädigungen geschützt, da sie nicht mehr dem rauhen Betrieb auf einer Baustelle und einem Umstülpvorgang ausgesetzt ist, der nur unter Inkaufnahme einer starken Faltenbildung durchgeführt werden kann. Ferner ist die Möglichkeit ausgeschlossen, daß der Verarbeiter des Schlauches die Innenlage durch unsachgemäße Handhabung beschädigt und beispielsweise durch einen zu hohen Einblasdruck zerstört. Durch den Wegfall eines gesonderten Einziehens der schlauchförmigen Innenlage tritt auf der Baustelle eine erhebliche Zeitersparnis von bis zu 2 Stunden ein, so daß die Sanierungskosten reduziert werden können. Dies ist bei der angespannten Finanzlage der Gemeinden von besonderem Vorteil, da mit dem gleichen Kostenaufwand größere Kanallängen saniert werden können.

Das für die Imprägnierung erforderliche Harz kann entweder von Anfang an in der Gesamtmenge, in Teilportionen oder über einen anfänglichen Längenabschnitt kontinuierlich eindosiert werden, worauf im Zusammenhang mit den Ausführungsbeispielen noch näher eingegangen wird.

Es ist dabei keineswegs zwingend, aber besonders vorteilhaft, daß man die Symmetrieebene des Walzenspalts bzw. der Walzen senkrecht ausrichtet; vielmehr ist auch eine Schiefstellung der Symmetrieebene des Walzenspaltes denkbar, beispielsweise dann, wenn man den imprägnierten Teilabschnitt des Schlauches, vom Walzenspalt ausgehend, über mindestens eine schiefe Ebene bewegt.

Weitere vorteilhafte Ausgestaltungen des erfindungsgemäßen Verfahrens ergeben sich aus den übrigen Verfahrensansprüchen.

Die Erfindung betrifft auch eine Vorrichtung zum Herstellen eines transportfähigen, mehrlagigen Schlauchs mit einer gasundurchlässigen Außenlage und mindestens einer mit einem aushärtbaren Harz imprägnierten Lage aus einem Faserwerkstoff zum Auskleiden von Rohrleitungen und Kanalsystemen mit einer Vakuumpumpe und Walzen, zwischen denen mindestens ein Walzenspalt für die Durchführung des Schlauchs vorhanden ist

Zur Lösung der gleichen Aufgabe ist eine solche Vorrichtung erfindungsgemäß dadurch gekennzeichnet, daß der zunächst noch unimprägnierte Schlauch von unten her in den Walzenspalt einführbar ist, daß die Vakuumpumpe diesseits des Walzenspalts an den unimprägnierten Teilabschnitt des Schlauchs angeschlossen ist, daß über der zunächst noch offenen Anfangsöffnung des Schlauches eine Dosiervorrichtung für flüssiges Harz angeordnet ist, und daß der Schlauch nach oben aus dem Walzenspalt abziehbar und nach Imprägnierung mit dem flüssigen Harz auf einer Transporteinrichtung ablegbar ist.

Eine solche Vorrichtung schafft nicht nur die Voraussetzungen für die Vorteile des erfindungsgemäßen Verfahrens, sondern ist darüber hinaus einfach, robust, wartungsfreundlich und verursacht geringe Investitions- und Betriebskosten. Sie erfordert auch einen nur geringen Platzbedarf, und es können mit einer einzigen Vorrichtung praktisch alle vorkommenden Schlauchabmessungen hinsichtlich Querschnitt und Längen und Wandstärken verarbeitet werden. Es ist beispielsweise möglich, auf einer solchen Vorrichtung Schläuche für die Sanierung von Rohrleitungen mit einem Nenndurchmesser bis zu 1.200 mm und darüber herzustellen.

Es ist dabei im Zuge einer weiteren Ausgestaltung der Vorrichtung von besonderen Vorteil, wenn mindestens eine der Walzen des Walzenspaltes beheizbar ist. Durch diese Maßnahme kann das Harz im Walzenspalt beheizt und dadurch seine Viskosität herabgesetzt werden, so daß der Imprägnierungsvorgang weiter beschleunigt werden kann. Eine Erwärmung des Harzes hat sich insbesondere dann als besonders vorteilhaft erwiesen, wenn das Harz mit Thixotropiermitteln versetzt ist. Es ist lediglich dafür Sorge zu tragen, daß die Beheizung des Harzes keine Aushärtung einleitet.

Weitere vorteilhafte Ausgestaltungen der erfindungsgemäßen Vorrichtung ergeben sich aus den übrigen Vorrichtungsansprüchen.

Zwei Ausführungsbeispiele des Erfindungsgegenstandes werden nachfolgend anhand der Figuren 1 bis 4 näher erläutert.

Es zeigen:
- Figur 1: einen Vertikalschnitt durch einen Schlauch mit einer Innenlage im Bereich des Stauvolumens sowie Seitenansichten der Walzen mit dem Walzenspalt und eine Abstütz- und Transportvorrichtung in Form eines Förderbandes,
- Figur 2: eine schematische Darstellung einer ersten Ausführungsform des Erfindungsgegenstandes mit den Details aus Figur 1,
- Figur 3: eine schematische Darstellung eines zweiten Ausführungsbeispiels des Erfindungsgegenstandes und
- Figur 4: eine Draufsicht auf zwei Abquetschwalzen sowie einen Querschnitt durch den Schlauch im Bereich der engsten Stelle des Walzenspaltes.

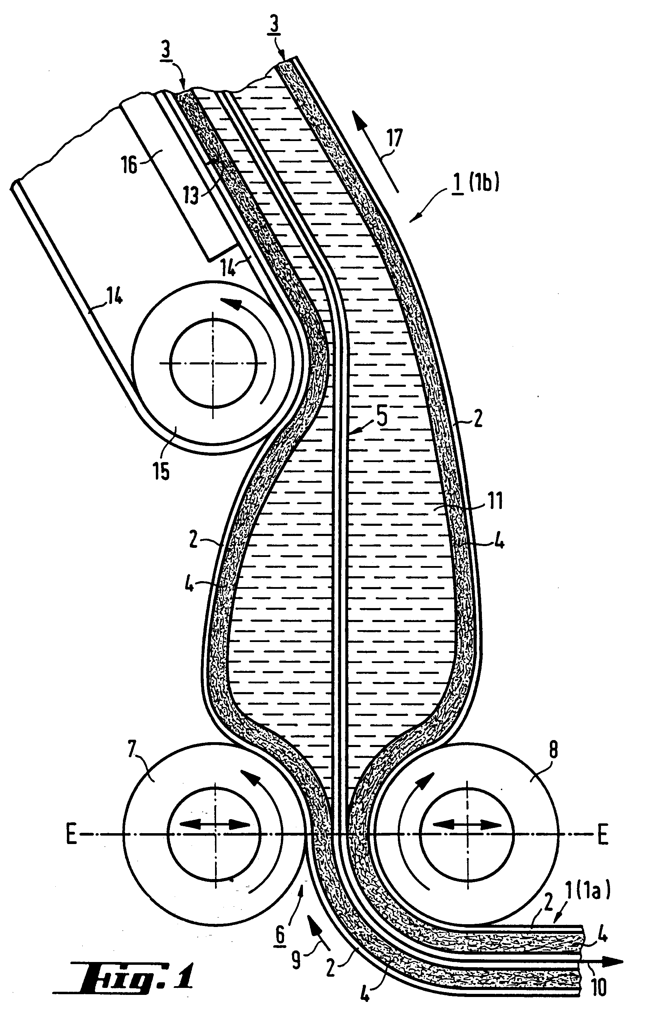

Anhand von Figur 1 soll der Kern der Erfindung näher erläutert werden.

Ein flachliegender Schlauch 1, dessen Wandung aus drei Lagen besteht, nämlich aus einer gasundurchlässigen Außenlage 2, einer inneren Lage 3 aus einem Faserwerkstoff 4 und aus einer gasundurchlässigen Innenlage 5, wird von der Seite her zugeführt und von unten in einen Walzenspalt 6 gefördert, der zwischen zwei zylindrischen Walzen 7 und 8 gebildet wird. Mindestens eine dieser Walzen 7 und 8 ist angetrieben, und die Rotationsachsen dieser Walzen liegen in einer gemeinsamen waagrechten Ebene E-E. In dieser Ebene sind die Walzen 7 und 8 in Richtung der beiden Doppelpfeile verstellbar, so daß der Anpreßdruck der Walzen an den Schlauch 1 und damit die Kompression und die nachfolgende Expansion des elastischen Faserwerkstoffs 4 eingestellt werden kann.

Entgegen der Transportrichtung des Schlauchs 1, die durch einen Pfeil 9 angegeben ist, wird der Schlauch 1 gemäß dem Pfeil 10 evakuiert. Dadurch wird die in Figur 1 gezeigte absolute Flachlage des Schlauches 1 bis zum Walzenspalt 6 erzwungen, wobei die Wirkung des atmosphärischen Drucks unterstützend wirkt. Es liegen also bis zum Walzenspalt 6 insgesamt sechs Schichten möglichst dicht aufeinander, die aus der Außenlage 2, dem Faserwerkstoff 4 und der Innenlage 5 bestehen. Die Außenlage 2 und die Innenlage 5 bestehen aus Folienschläuchen, die auch Nähte aufweisen können, aber nicht müssen. Der Faserwerkstoff 4 hat gleichfalls die Form eines Schlauches, der auf dem Umfang durch eine der üblichen Verbindungstechniken geschlossen ist. Der unimprägnierte bzw. "trockene" Teilabschnitt des Schlauches wird mit 1a bezeichnet, der imprägnierte Teilabschnitt des Schlauches mit 1b.

Im Walzenspalt öffnet sich dann allmählich der Schlauch 1 unter der Wirkung des geodätischen Drucks eines aushärtbaren flüssigen Harzes 11, das das an dieser Stelle gebildete Stauvolumen ausfüllt. Hierbei bleibt die Innenlage 5 flach aufeinanderliegend und schwimmt gewissermaßen in dem flüssigen Harz 11. Dies setzt natürlich voraus, daß das flüssige Harz in den Zwischenraum zwischen dem Faserwerkstoff 4 und der Innenlage 5 eingebracht wird. Durch die Bildung des Stauvolumens erfahren die Außenlage 2 und der Faserwerkstoff 4 eine entsprechende Querkontraktion, so daß die Innenlage 5 quer zur Transportrichtung leicht wellig wird, was jedoch für die Erreichung des Endzwecks nicht von Nachteil ist. Wie die Figur 1 erkennen läßt, erhält das flüssige Harz 11 dadurch die Möglichkeit, um die Innenlage 5 herumzuströmen, was bei den bisher bekannten Verfahren nicht möglich war.

Jenseits des Walzenspalts 6 steht innerhalb des Schlauchs 1 kein Vakuum mehr an, jedenfalls mit Ausnahme des praktisch nicht vorhandenen Innenraums der Innenlage 5. Dadurch schmiegen sich die Außenlage 2 und der Faserwerkstoff 4 etwa in den oberen inneren Quadranten des Walzenspalts 6 an die Zylinderflächen der Walzen 7 und 8 an, wie dies in Figur 1 dargestellt ist. Sofern die Walzen 7 und 8 beheizt sind, erfolgt dadurch auch ein gewisser Wärmeübergang durch den Schlauch in das flüssige Harz. Der Faserwerkstoff 4 wird jedenfalls in kürzester Zeit oberhalb der Ebene E-E, in der die engste Stelle des Walzenspaltes liegt, mit dem flüssigen Harz vollständig imprägniert.

Gemäß Figur 1 wird der imprägnierte Teilabschnitt 1b des Schlauches 1 senkrecht nach oben abgezogen, jedenfalls mit einer vertikalen Bewegungskomponente, wobei sich der Schlauch nachfolgend auf einer schiefen Ebene 13 abstützt, die durch das obere Trumm eines Förderbandes 14 gebildet wird, das um eine Umlenkwalze 15 herumgeführt wird. Zur Abstützung des oberen Trumms des Förderbandes 14 ist eine Stützplatte 16 vorgesehen. Der imprägnierte Teilabschnitt 1b des Schlauches wird in Richtung des Pfeils 17 abgezogen.

Die Funktion der Umlenkwalze 15 kann auch durch die Walze 7 übernommen werden; in diesem Fall wird das Förderband 14 um die Walze 7 herumgeführt.

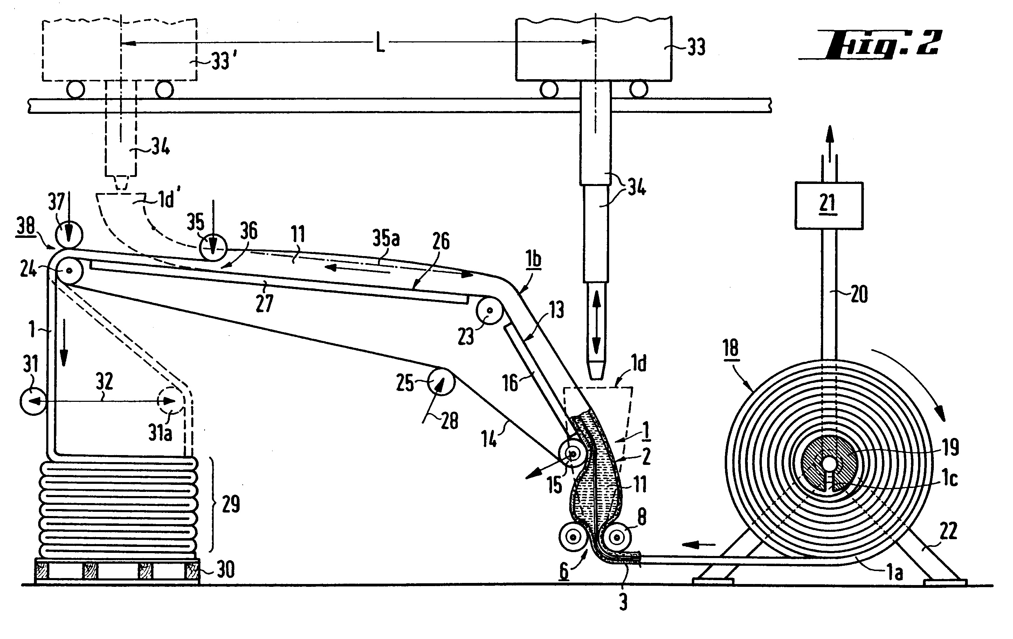

Figur 2 zeigt den Gegenstand von Figur 1 in stark verkleinertem Maßstab. Soweit erforderlich, wurden die gleichen Bezugszeichen beibehalten. Der unimprägnierte Teilabschnitt 1a des Schlauches 1 wird auf einer Vorratsrolle 18 gehalten, deren Kern durch einen Rollenträger 19 mit einem achsparallelen Schlitz gebildet wird, in den das Schlauchende 1c vakuumdicht eingesetzt ist. An den Rollenträger 19 ist über eine Saugleitung 20 eine Vakuumpumpe 21 angeschlossen, die Luft aus dem unimprägnierten Teilabschnitt 1a des Schlauches 1 absaugt. Der Rollenträger 19 ist drehbar zwischen zwei Lagerböcken 22 gehalten, von denen nur der hintere dargestellt ist.

Das Förderband 14 ist über drei weitere Umlenkwalzen 23, 24 und 25 geführt, von denen das Trumm zwischen den Umlenkwalzen 23 und 24 eine weitere schiefe Ebene 26 definiert. Zur Abstützung dient eine weitere Stützplatte 27. Die Umlenkwalze 25 ist in einer Spannvorrichtung 28 gelagert, die durch einen Pfeil angedeutet ist.

Der Schlauch kann auch in Mäanderform gefaltet angeliefert werden. Soll die anfängliche Evakuierungszeit verringert werden, dann kann es zweckmäßig sein, Saugdüsen in Abständen vor dem Walzenspalt in die Außenlage einzustechen und die Einstichlöcher kurz vor dem Walzenspalt wieder zu verschließen.

Jenseits der Umlenkwalze 24 wird der nunmehr imprägnierte Schlauchabschnitt 1b des Schlauches 1 nach unten geführt und in Form eines mäanderförmigen Schlauchstapels 29 auf einer Transporteinrichtung 30 gesammelt, die als Palette ausgeführt ist. Der mäanderförmige Aufbau des Schlauchstapels 29 wird durch eine Changierwalze 31 bewirkt, die in Richtung des Doppelpfeils 32 zwischen der ausgezogen darstellten Stellung und der gestrichelt dargestellten Stellung 31a hin und her beweglich ist. Die Lagerungen und Antriebe der einzelnen Walzen sind nicht näher dargestellt; es ist auch nicht erforderlich, sämtliche Walzen anzutreiben.

Zu Beginn des Produktionsprozesses einer vorgegebenen Länge des Schlauches 1 wird der Schlauchanfang 1d in etwa senkrecht aufgestellt, wie dies oberhalb des Walzenspaltes 6 gestrichelt dargestellt ist. Oberhalb der dadurch gebildeten Öffnung am Schlauchanfang 1d befindet sich ein Vorratsbehälter 33 für flüssiges Harz, das über ein Teleskoprohr 34 dosiert in den geöffneten Schlauchanfang eingegeben wird. Das erforderliche Dosierventil ist in der Zeichnung nicht dargestellt. Sobald der Faserwerkstoff oberhalb des Walzenspaltes 6 satt, d.h. luftfrei imprägniert ist, bildet sich innerhalb des Walzenspaltes eine Art flüssiger Verschluß, bis zu dem die Wirkung der Vakuumpumpe 21 reicht. Im Anschluß daran wird der Schlauchanfang 1d unter Beibehaltung seiner Öffnung auf der schiefen Ebene 13 abgelegt und über die Umlenkwalze 23 und die zweite schiefe Ebene 26 bis in die Nähe der Umlenkwalze 24 geführt, wobei die Öffnung am Schlauchende 1d' weiterhin nach oben gerichtet bleibt, wie dies links in Figur 2 gestrichelt dargestellt ist. Dieser Bewegung des Schlauchanfangs 1d bzw. 1d' folgt der Vorratsbehälter 33 mit dem flüssigen Harz über einen Verfahrweg L bis in eine Position 33', die in Figur 2 links oben dargestellt ist. Alsdann wird die Harzzufuhr, die kontinuierlich oder portionsweise erfolgen kann, unterbrochen. Der Schlauchanfang 1d' wird alsdann durch ein Klebeband verschlossen und unter eine weitere Walze 35 geschoben, die sich zuvor in einer angehobenen Position befunden hat. Diese wird in die in Figur 2 gezeigte Stellung abgesenkt, wodurch ein weiterer Walzenspalt 36 mit einer Abquetschwirkung eingestellt wird. Auch der Walzenspalt 36 ist einstellbar, um im Harz zusätzlich zum Gefälle eine Druckerhöhung zu erzeugen. Die Walze 35 ist in Richtung des Pfeils 35a verstellbar, um dem sich ständig verringernden Stauvolumen des Harzes folgen zu können. Daraus ist erkennbar, daß ein Walzenspalt nicht notwendigerweise durch zwei Walzen gebildet werden muß, sondern auch durch eine Walze und ein Förderband gebildet werden kann. Auch oberhalb der Umlenkwalze 24 ist wiederum eine weitere Walze 37 angeordnet, die einen weiteren Walzenspalt 38 definiert, durch den der Schlauch 1 hindurchgeführt wird, bevor er auf dem Schlauchstapel 29 abgelegt wird.

Das Stauvolumen des Harzes 11 erstreckt zwischen dem Walzenspalt 6 und dem Walzenspalt 36. Die in diesem Stauvolumen befindliche Harzmenge entspricht der für die Restlänge des Schlauches benötigten Harzmenge, die nach dem Verschluß des Schlauchanfangs 1d nicht mehr ergänzt wird. Entsprechend lang ist der Transportweg des Schlauches 1 zwischen dem Walzenspalt 6 und dem Walzenspalt 36 zu wählen.

Die Höhendifferenz zwischen dem Walzenspalt 6 und dem Walzenspalt 36 bestimmt auch den geodätischen Druck über dem Walzenspalt 6 und damit die Wirksamkeit der Imprägnierung. Es versteht sich, daß die Neigungen der schiefen Ebenen 13 und 26 verstellbar sein können und den Parametern des Imprägnierprozesses angepaßt werden können. Dabei kann die schiefe Ebene 26 auch zumindest angenähert waagrecht verlaufen.

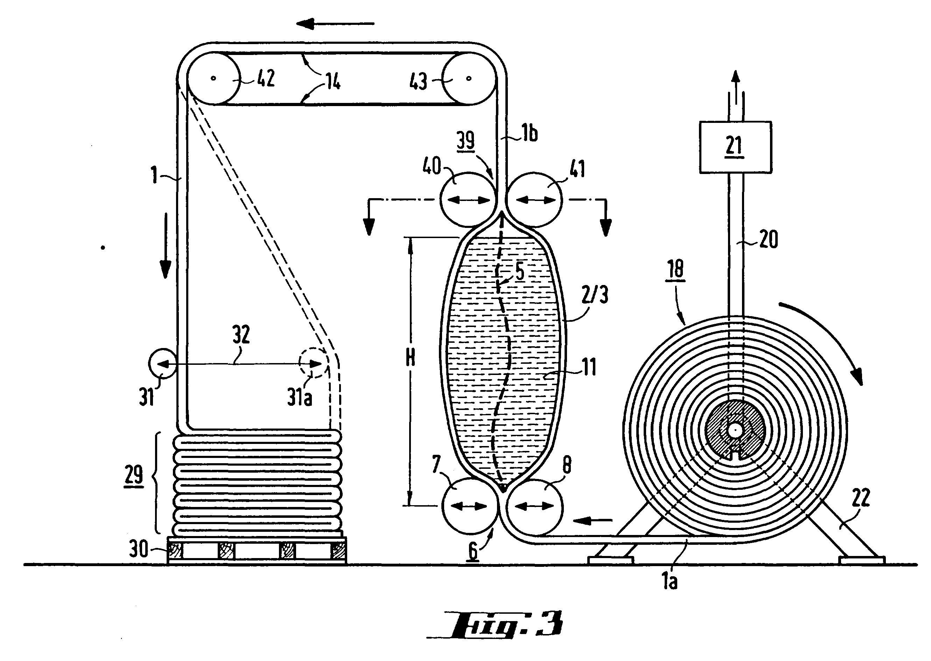

Bei dem Ausführungsbeispiel nach Figur 3 wird der imprägnierte Teilabschnitt 1b des Schlauches 1 senkrecht nach oben aus dem Walzenspalt 6 abgezogen; im übrigen bleiben die Verfahrensbedingungen und die Vorrichtungsdetails weitgehend unverändert. In diesem Fall wird die gesamte für die vorgegebene Schlauchlänge benötigte Harzmenge 11 auf einmal in den Schlauchanfang eingegeben, was hier jedoch nicht näher dargestellt ist. Auch in diesem Fall "schwimmt" die hier nur gestrichelt angedeutete doppelte Innenlage 5 innerhalb des Stauvolumens, und der imprägnierte Teilabschnitt 1b des Schlauches wird durch einen weiteren Walzenspalt 39 hindurchgeführt, der zwischen zwei weiteren Walzen 40 und 41 gebildet wird. Diese Walzen 40 und 41 sind gleichfalls in horizontaler Richtung verstellbar, um die Abquetschwirkung innerhalb des Walzenspaltes 39 optimal einstellen zu können. Auch in diesem Fall wird der imprägnierte und nunmehr flachliegende Teilabschnitt 1b des Schlauches 1 über ein Förderband 14 bewegt und in der bereits beschriebenen Weise als Schlauchstapel 29 auf der Transporteinrichtung 30 abgelegt. Das Förderband 14 wird hierbei nur über zwei Umlenkwalzen 42 und 43 geführt. Sämtliche Walzen drehen sich mit gleicher Umfangsgeschwindigkeit, wobei gegebenenfalls nur ein Teil der Walzen angetrieben werden muß. Auch in diesem Falle sind die Walzenlager und die Verstelleinrichtungen nicht näher dargestellt.

Die Walzen 40 und 41 können in vertikaler Richtung verstellbar sein, gegebenenfalls auch nur durch ihr Eigengewicht in Verbindung mit nicht gezeigten Vertikalführungen. Dadurch werden die Walzen 40 und 41 gewissermaßen dem schwindenden Stauvolumen des Harzes nachgeführt.

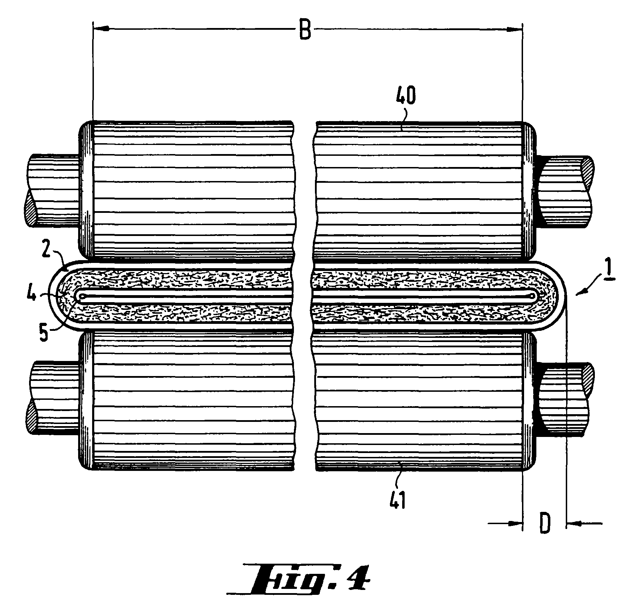

Figur 4 zeigt den flachliegenden, imprägnierten Schlauch 1 zwischen zwei Abquetschwalzen, die den Walzen 40 und 41 in Figur 3 entsprechen können. Es ist erkennbar, daß die Walzen 40 und 41 an ihren Enden abgerundet sind und eine Arbeitsbreite B aufweisen, die kleiner ist als die Breite des flachliegenden Schlauches 1, und zwar derart, daß die beiden Längsfalten des Schlauches 1 nicht dem Preßdruck der Walzen 40 und 41 ausgesetzt sind. Dadurch wird verhindert, daß die Imprägnierung bzw. die Harzmenge im Bereich der besagten Längsfalten unzulässig vermindert wird. Das Maß des Überstandes D des Schlauches über die Arbeitsbreite B der Walzen 40 und 41 entspricht dabei vorteilhaft mindestens der doppelten Wandstärke des Schlauches, und zwar einschließlich der Außenlage 2, des Faserwerkstoffs 4 und der Innenlage 5.

## Patentansprüche

1. Verfahren zum Herstellen eines transportfähigen, mehrlagigen Schlauchs (1) mit einer gasundurchlässigen Außenlage (2) und mindestens einer mit einem aushärtbaren Harz (11) imprägnierten Lage (3) aus einem Faserwerkstoff (4) zum Auskleiden von Rohrleitungen und Kanalsystemen unter Anwendung von unteratmosphärischem Druck und von Walzen (7, 8), zwischen denen mindestens ein Walzenspalt (6) für die Durchführung des Schlauches (1) gebildet wird, **dadurch gekennzeichnet**, daß man den zunächst noch unimprägnierten Schlauch (1) von unten her in den Walzenspalt (6) einführt und Luft aus dem unimprägnierten Teilabschnitt (1a) des Schlauchs (1) evakuiert, flüssiges Harz (11) in die zunächst noch offene Anfangsöffnung (1d) des Schlauchs (1) einbringt und über dem Walzenspalt (6) aufstaut, und den Schlauch (1) mit einer nach oben gerichteten Komponente aus dem Walzenspalt (6) mit einer solchen Geschwindigkeit abzieht, daß die Grenze zwischen dem imprägnierten und dem nicht imprägnierten Teilabschnitt (1a bzw. 1b) des Schlauchs (1) im wesentlichen im Bereich des Walzenspaltes (6) gehalten wird, und daß man schließlich den Schlauch (1) durch mindestens einen weiteren Walzenspalt (36, 38, 39) abzieht und auf einer Transporteinrichtung (30) sammelt.

2. Verfahren nach Anspruch 1, **dadurch gekennzeichnet**, daß ein Schlauch (1) mit einer gasundurchlässigen flach aufeinanderliegenden Innenlage (5) eingesetzt wird und daß das flüssige Harz (11) beiderseits dieser Innenlage (5) oberhalb des Walzenspalts (6) aufgestaut wird.

3. Verfahren nach Anspruch 1, **dadurch gekennzeichnet**, daß man den zunächst noch offenen Anfang (12) des Schlauches (1) auf einer Länge aufrichtet, die ausreicht, um mindestens eine Teilmenge des Harzes (11) aufzunehmen, und die gegebenenfalls noch vorhandene Restmenge des Harzes nach und nach in den Schlauch (1) eingibt, abschließend den Schlauchanfang (12') flachlegt und mit dem Transport des Schlauchs (1) durch mindestens einen weiteren Walzenspalt (36, 38, 39) beginnt.

4. Verfahren nach Anspruch 1, **dadurch gekennzeichnet**, daß man den unimprägnierten Teilabschnitt (1a) des Schlauchs auf einer Vorratsrolle (18) mit einem Rollenträger (19) hält und durch diesen evakuiert.

5. Verfahren nach Anspruch 1, **dadurch gekennzeichnet**, daß man den Schlauch (1) unter Fortsetzung der Evakuierung des unimprägnierten Teilabschnitts (1a) des Schlauchs (1) durch den Walzenspalt (6) transportiert.

6. Verfahren nach Anspruch 1, **dadurch gekennzeichnet**, daß man den imprägnierten Teilabschnitt (1b) des Schlauchs (1), vom Walzenspalt (6) ausgehend, über mindestens eine schiefe Ebene (13, 26) bewegt.

7. Verfahren nach Anspruch 1, **dadurch gekennzeichnet**, daß man den imprägnierten Teilabschnitt (1b) des Schlauches (1), vom Walzenspalt (6) ausgehend, im wesentlichen senkrecht nach oben bewegt.

8. Vorrichtung zum Herstellen eines transportfähigen, mehrlagigen Schlauchs (1) mit einer gasundurchlässigen Außenlage (2) und mindestens einer mit einem aushärtbaren Harz (11) imprägnierten Lage (3) aus einem Faserwerkstoff (4) zum Auskleiden von Rohrleitungen und Kanalsystemen mit einer Vakuumpumpe (21) und Walzen (7, 8), zwischen denen mindestens ein Walzenspalt (6) für die Durchführung des Schlauchs (1) vorhanden ist, **dadurch gekennzeichnet**, daß der zunächst noch unimprägnierte Schlauch (1) von unten her in den Walzenspalt (6) einführbar ist, daß die Vakuumpumpe (21) diesseits des Walzenspalts (6) an den unimprägnierten Teilabschnitt (1a) des Schlauchs (1) angeschlossen ist, daß über der zunächst noch offenen Anfangsöffnung (1d) des Schlauches (1) eine Dosiervorrichtung für flüssiges Harz angeordnet ist, und daß der Schlauch (1) nach oben aus dem Walzenspalt (6) abziehbar und nach Imprägnierung mit dem flüssigen Harz auf einer Transporteinrichtung (30) ablegbar ist.

9. Vorrichtung nach Anspruch 8, **dadurch gekennzeichnet**, daß die Achsen der den Walzenspalt (6) begrenzenden Walzen (7, 8) in einer zumindest im wesentlichen waagrechten Ebene angeordnet sind.

10. Vorrichtung nach Anspruch 8, **dadurch gekennzeichnet**, daß der Walzenspalt (6) einstellbar ausgebildet ist.

11. Vorrichtung nach Anspruch 8, **dadurch gekennzeichnet**, daß mindestens eine der Walzen (7, 8) des Walzenspalts (6) beheizbar ist.

12. Vorrichtung nach Anspruch 8, **dadurch gekennzeichnet**, daß dem senkrechten Walzenspalt (6) mindestens ein weiterer Walzenspalt (36, 38, 39) für das Abquetschen überschüssigen Harzes nachgeschaltet ist.

13. Vorrichtung nach Anspruch 8, **dadurch gekennzeichnet**, daß mindestens eine der Walzen (35, 37, 40, 41) eine Arbeitsbreite "B" aufweist, die kleiner ist als die Breite des flachliegenden Schlauchs (1), derart, daß die beiden Längsfalten des Schlauchs (1) nicht dem Preßdruck der Walzen (36, 37, 40, 41) ausgesetzt sind.
